# FASCICULE DE BREVET EUROPEEN

(11) **EP 1 613 103 B1**
(45) Date de publication et mention de la délivrance du brevet: **25.03.2015**
(21) Numéro de dépôt: 05300362.0
(22) Date de dépôt: 10.05.2005
(51) Int. Cl.: G06Q 10/10, H04L 12/58

(54) **Procédé de détection de messages redondants dans un flot de messages**
Verfahren zur Erkennung redundanter Nachrichten in einem Nachrichtenstrom
Method for detection of redundant messages in a message stream

(30) Priorité: 02.07.2004 FR 0451407
(43) Date de publication de la demande: 04.01.2006
(73) Titulaire: Société Française du Radiotéléphone, 92915 Paris la Défense (FR)
(72) Inventeur: Bouvier, Christian, 91470, LIMOURS (FR); Wary, Jean-Philippe, 92340, BOURG LA REINE (FR)
(74) Mandataire: Schmit, Christian Norbert Marie

(56) Documents cités:
- WO-A-01/33889
- WO-A-02/25479
- WO-A-2004/068287
- GB-A- 2 397 139
- PATENT ABSTRACTS OF JAPAN vol. 2000, no. 04, 31 août 2000 (2000-08-31) & JP 2000 010880 A (RICOH CO LTD), 14 janvier 2000 (2000-01-14)
- MANCO G ET AL: "A framework for adaptive mail classification" PROCEEDINGS OF THE 14TH IEEE INTERNATIONAL CONFERENCE ON TOOLS WITH ARTIFICIAL INTELLIGENCE. ICTAI 2002. WASHINGTON, DC, NOV. 4 - 6, 2002, IEEE INTERNATIONAL CONFERENCE ON TOOLS WITH ARTIFICIAL INTELLIGENCE, LOS ALAMITOS, CA : IEEE COMP. SOC, US, vol. CONF. 14, 4 novembre 2002 (2002-11-04), pages 387-392, XP010632464 ISBN: 0-7695-1849-4
- ANONYMOUS: "SSF - Detecting, filtering and blocking unwanted SMS" [Online] 26 août 2003 (2003-08-26), BMD WIRELESS , INTERNET , XP002316329 Extrait de l'Internet: URL:http://web.archive.org/web/20030826171 249/http://www.bmdwireless.com/main.php?co ntent=solutions_ssf> [extrait le 2005-02-01] * le document en entier *

## Description

L'invention a pour objet un procédé de détection de messages redondants dans un flot de messages. Le domaine de l'invention est celui des messageries électroniques et plus particulièrement celui des messageries électroniques propres à la téléphonie mobile. Encore plus particulièrement le domaine de l'invention est celui des messages courts aussi appelés messages SMS (Short Message Service, pour service de message court).

Un but de l'invention et d'améliorer la détection de messages redondants dans un flot de messages. Un exemple de message redondant peut être un message non sollicité appelé aussi SPAM.
Un autre but de l'invention est de réduire la charge des réseaux de télécommunications.

Le document WO 02/25479 A1 décrit un système de catégorisation de documents comprenant un dispositif de regroupement destiné à former des groupes de documents électroniques associés sur la base de caractéristiques extraites desdits documents, ainsi qu'un module de filtre destiné à produire un filtre sur la base de ces groupes en vue de catégoriser d'autres documents reçus pas le système.

Dans l'état de la technique on connaît plusieurs solutions de détection de messages non sollicités. Parmi celles-ci les plus simples à mettre en oeuvre sont celles consistant à effectuer un filtrage sur les adresses des émetteurs. De telles adresses sont par exemple des numéros de téléphone d'un émetteur ou, à un niveau plus proche de l'infrastructure du réseau, l'adresse SS7 de l'équipement étant à l'origine de l'émission du message. Cette méthode est cependant inefficace car d'adaptabilité trop lente.

Une autre solution est basée sur le calcul de sommes de contrôle ou empreinte numérique du contenu des messages, ces sommes de contrôle étant alors comparées à une base de sommes de contrôle connues. Il est cependant devenu courant d'introduire une variabilité dans les messages non sollicités. Cette variabilité étant aléatoire, cette solution est devenue totalement inefficace.

La solution la plus récente dans le domaine est l'utilisation de méthodes d'analyse statistique et en particulier les travaux de Paul Graham sur les filtres bayesiens. Cependant ces solutions requièrent une période d'apprentissage longue et surtout suivie dans le temps. En particulier la mise en oeuvre d'une telle solution requiert la préexistence d'un dictionnaire et sa maintenance pour conserver l'efficacité du filtre. Les messages non sollicités sont alors détectés à partir du contenu du dictionnaire.

Dans la pratique l'envoi de messages non sollicités se fait de manière massive sur une période de temps relativement brève, de quelques heures tout au plus. Il est donc très difficile de maintenir un dictionnaire pouvant servir à une détection bayesienne dans ces conditions.

Dans l'invention on résout ces problèmes en mettant en oeuvre un procédé permettant de produire dynamiquement un dictionnaire. Pour ce faire on enregistre des messages sur une période donnée, par exemple 20 minutes correspondant à ce que l'on va appeler une fenêtre temporelle. Ces messages sont alors assemblés et le résultat de la concaténation est soumis à un algorithme de recherche de motifs répétitifs, ce type d'algorithme est couramment mis en oeuvre dans la première étape des algorithmes usuels de compression. Cet algorithme de recherche crée le dictionnaire de motifs. En plus de créer le dictionnaire de motifs, le procédé selon l'invention affecte à chaque motif une fréquence d'apparition dans le résultat de la concaténation. A partir de ce dictionnaire on effectue une sélection des messages susceptibles d'être des messages non sollicités. Dans l'invention un tel message est un message comportant un motif d'une longueur supérieure à un premier seuil et dont la fréquence d'apparition est supérieure à un deuxième seuil. Pour traiter les messages des fenêtres temporelles suivantes on utilise les dictionnaires produits lors des fenêtres temporelles précédentes. Le traitement d'une fenêtre temporelle permet donc la mise à jour du dictionnaire de motifs. Cela permet en particulier d'éliminer du dictionnaire les motifs ayant n'apparaissant plus, ou dont le nombre d'apparition est inférieur à un seuil prédéterminé depuis un nombre prédéterminé de fenêtres temporelles.

Une telle solution permet une détection efficace des messages non sollicités, et réduit à néant la maintenance humaine sur le processus de détection.

L'invention a donc pour objet un procédé de détection de messages redondant dans un flot de messages ayant une longueur L maximale connue et mesurée en nombre de caractères selon la revendication 1.

Avantageusement l'invention est aussi caractérisée en ce que les messages sont des messages courts.

Avantageusement l'invention est aussi caractérisée en ce que les N messages sont ajustés- ajustement de la longueur des N messages à la longueur L en complétant les messages plus courts par des caractères ou motifs prédéterminé,

Avantageusement l'invention est aussi caractérisée en ce que L est compris entre 100 et 200.

Avantageusement l'invention est aussi caractérisée en ce que N correspond au nombre de messages traités par un dispositif mettant en oeuvre le procédé pendant une durée comprise entre 10 minutes et 30 minutes.

L'invention est caractérisée en ce que le dictionnaire de motifs est réalisé à partir l'étape de recherche de motifs répétitifs de l'algorithme de compression LZW.

Avantageusement l'invention est aussi caractérisée en ce que la détection de messages redondants dans la fenêtre temporelle active est réalisée en complétant le dictionnaire issu du traitement des K-1 fenêtres temporelles précédemment traitées.

Avantageusement l'invention est aussi caractérisée en ce qu'un motif est retiré du dictionnaire si son nombre d'apparition dans la fenêtre active ou les cas fenêtre temporelles est nul ou inférieur à un seuil prédéterminé.

L'invention sera mieux comprise à la lecture de la description qui suit et à l'examen des figures qui l'accompagnent. Celles-ci sont présentées à titre indicatif et nullement limitatif de l'invention. Les figures montrent:
- Figure 1: une illustration de moyens utiles à la mise en oeuvre du procédé selon l'invention.
- Figure 2: une illustration du procédé selon l'invention.

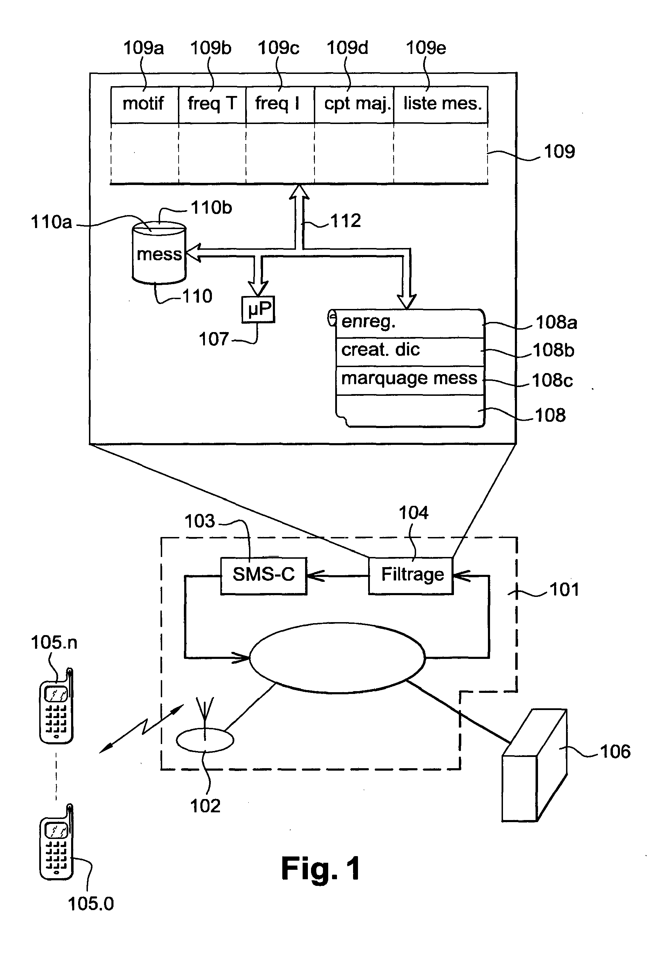

La figure 1 montre un réseau 101 de télécommunication. Dans notre exemple on présente un réseau GSM, étant entendu que l'invention s'applique aussi au réseau de télécommunications de troisième génération comme l'UMTS. L'invention s'applique à tout type de réseau proposant des services de messagerie et plus généralement à tout système de messagerie centralisée.

Le réseau 101 comporte toute l'infrastructure permettant la mise en oeuvre de services tels que la transmission de la voix, de messages courts, de données,..., la liste n'étant pas exhaustive. En particulier le réseau comporte au moins une station 102 de base à laquelle se connectent des terminaux 105.0 à 105.n d'abonnés. Le réseau 101 comporte aussi au moins un serveur 103 SMS-C (Short Message Service - Center, pour centre de service de messages courts) servant à la gestion des messages courts dans le réseau 101. Dans l'invention un message court est traité par un serveur 104 de filtrage permettant la détection des messages redondants. Le serveur 104 est situé à l'entrée du serveur 103. Cela signifie qu'un message court est traité par le serveur 104 avant d'être traité par le serveur 103. On dit aussi que le serveur 104 est monté en coupure sur le flux de message traité par le serveur 103. Dans une variante de l'invention, le serveur 104 peut être positionné en dérivation sur le flux de messages SMS.

Dans la pratique les serveurs 103 et 104 peuvent très bien n'être qu'une seule et même machine.

La figure 1 montre aussi un serveur 106 d'un prestataire ou d'une personne indélicate, apte à émettre des messages courts sur le réseau 101 à destination des terminaux 105.

Le serveur 104 comporte au moins un microprocesseur 107, une mémoire 108 de programme, une mémoire 109 de dictionnaire, une mémoire 110 de messages. Les éléments 107 à 110 sont interconnectés via un bus 112. Le serveur 104 comporte aussi des moyens non représentés de communication avec le réseau 101 et le serveur 103.

D'une manière générale, lorsque l'on prête une action à un appareil, cette action est réalisée par un microprocesseur de l'appareil commandé par des codes instructions enregistrés dans une mémoire de l'appareil.

La mémoire 108 comporte au moins une zone 108.a comportant des codes instructions pour l'enregistrement de messages courts dans la mémoire 110, une zone 108.b comportant des codes instructions pour la mise à jour d'un dictionnaire, et une zone 108.c comportant des codes instructions pour le marquage de messages détectés comme étant redondants.

La mémoire 109 dictionnaire est ici décrite comme une table dont un enregistrement est une ligne. Chaque enregistrement correspond à un motif. Un motif est une chaîne de caractères. La plupart du temps un caractère est codé sur un octet en utilisant, par exemple, le code ASCII. Cependant de plus en plus, pour des raisons liées à l'internationalisation, et donc à la multiplicité des alphabets, les caractères sont codés sur 2 octets en utilisant, par exemple, le jeu de caractères unicode. L'invention s'applique à tous les jeux de caractères sans discrimination, quelle que soit la taille nécessaire au stockage de l'information caractérisant un caractère. Dans la suite de la description nous considérons qu'un caractère est stocké sur un octet, mais ce point n'est pas limitatif de l'invention.

La mémoire 109 comporte aussi plusieurs colonnes chaque colonne correspondant à une propriété du motif. La mémoire 109 comporte au moins une colonne 109.a correspondant au motif lui-même, et une colonne 109.b comportant une fréquence d'apparition du motif. Dans la variante de mise en oeuvre décrite à titre d'exemple, la mémoire 109 comporte aussi une colonne 109.c de fréquence d'apparition intermédiaire, une colonne 109.d de compteur de mise à jour et une colonne 109.e de liste de messages comportant le motif de la colonne 109.a.

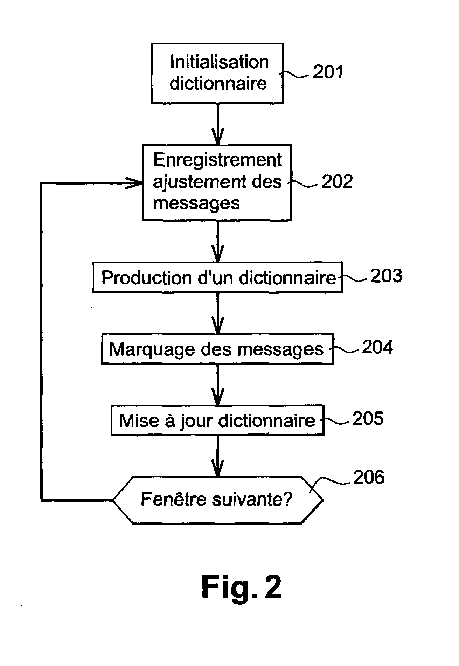

La figure 2 montre une étape 201 d'initialisation du dictionnaire. Cette étape correspond en fait au lancement du procédé de détection de messages redondants. A ce moment la mémoire 109, aussi désignée comme dictionnaire 109, est vide, c'est-à-dire ne comporte aucun enregistrement ni motif.

De l'étape 201 le serveur 104 passe à une étape 202 d'enregistrement de messages. La mémoire 110 comporte deux parties 110.a et 110.b, chacune permettant d'enregistrer les messages courts correspondant à une fenêtre temporelle. Dans la pratique l'étape 202 est réalisée en permanence par le serveur 104, le principe étant que l'on enregistre les messages courts d'une fenêtre temporelle pendant que l'on traite ceux de la fenêtre temporelle précédente. Les deux zones de la mémoire 110 sont donc aussi appelées zone d'enregistrement et zone de traitement. A chaque changement de fenêtre temporelle, les deux zones de la mémoire 110 échangent leur fonction. Le traitement consiste ici à déterminer si un message court est redondant ou non, puis à émettre le message court traité et marqué, s'il est redondant.

De par sa localisation dans le réseau 101, le serveur 104 voit passer tous les messages courts gérés par le serveur 103. Durant l'étape 202 le serveur 104 enregistre dans la zone d'enregistrement de la mémoire 110 tous les messages courts pendant une fenêtre temporelle ayant une durée prédéterminée. Dans un exemple préféré cette fenêtre temporelle a une durée d'une vingtaine de minutes. Dans des variantes cette fenêtre temporelle peut être plus ou moins longue mais idéalement cette fenêtre temporelle ne devrait pas contenir moins de 1000 messages différents, ce nombre correspondant à un flux minimal de messages courts de deux messages par seconde.

Durant cette fenêtre temporelle lorsqu'un message court est reçu par le serveur 104, ce message peut être complété à une longueur L suivant les choix d'implémentation. Dans la description nous considérons le cas des messages SMS GSM, un tel message a une longueur maximale L = 162 caractères. Si le serveur 104 reçoit un tel message faisant moins de 162 caractères, alors le serveur 104 ajoute à la fin du message autant de caractères de complément que requis pour que le message ainsi complété et ajusté ait une longueur de 162 caractères. Le caractère de complément est, par exemple, le caractère 'espace' permettant la séparation des mots. Une fois complété le message est enregistré dans la zone d'enregistrement de la mémoire 110. A la fin de l'étape 202, c'est-à-dire à la fin de la fenêtre temporelle, la zone d'enregistrement mémoire 110 comporte donc une séquence de N messages courts de L caractères de long reçus durant la fenêtre temporelle. Chaque message a ainsi un indice dans la mémoire 110.

Si la fenêtre temporelle s'étend sur 20 minutes et en choisissant une hypothèse raisonnable de 100 messages par seconde, alors N vaut 120000.

A la fin de l'étape 202 la zone d'enregistrement devient la zone de traitement et vice versa. Le serveur commence alors le traitement des messages enregistrés dans la zone de traitement et il continue à enregistrer les messages arrivant dans la zone d'enregistrement.

De l'étape 202 le serveur 104 passe à une étape 203 de mise à jour du dictionnaire 109. Dans la pratique l'étape 203 est initiée à la fin de chaque fenêtre temporelle. La mise à jour du dictionnaire 109 se fait selon l'étape de recherche de motifs répétitifs de l'algorithme de compression LZW. Brièvement cet algorithme implique la lecture séquentielle de la zone de traitement de la mémoire 110. Si on considère la variante de l'algorithme consistant à lire la zone de traitement de la mémoire 110 caractère par caractère l'algorithme se résume de la façon suivante.

C vaut le premier caractère de la zone de traitement de la mémoire 110,

Tant qu'il reste un caractère à lire dans la zone de traitement de la mémoire 110 on effectue les opérations suivantes:
D vaut le caractère suivant dans la zone de traitement de la mémoire 110
M vaut la concaténation de C et D
si M est un motif du dictionnaire 109
   alors C vaut M, et on incrémente la fréquence d'apparition de M dans le dictionnaire,
   sinon on insère M dans le dictionnaire 109 et C vaut D.

Dans ce résumé C, D et M sont des variables et 'vaut' est utilisé comme un opérateur d'affectation permettant d'affecter à la variable de gauche la valeur de la variable de droite. La fenêtre temporelle servant à la mise à jour du dictionnaire est appelée fenêtre active.

Il existe de nombreuses variantes de cet algorithme dont l'intérêt est la capacité de produire dynamiquement un dictionnaire de motifs répétitifs en une seule lecture de la zone de traitement de la mémoire 110. Dans la pratique l'invention utilise, pour produire le dictionnaire 109, n'importe quel algorithme de production dynamique de dictionnaires, ces algorithmes étant issus du monde de la compression.

L'augmentation de la fréquence d'apparition de M dans le dictionnaire se fait en augmentant de une unité la valeur de la colonne 109.c pour le motif M.

L'insertion de M dans le dictionnaire 109 est en fait la création d'une nouvelle ligne dans le dictionnaire 109. Pour cette nouvelle ligne la colonne 109.a vaut M, la colonne 109.b vaut 0, la colonne 109.c vaut 0 et la colonne 109.d vaut K. Dans un exemple K vaut 5 et correspond au nombre maximal de fenêtres temporelles durant lesquelles un motif peut rester dans le dictionnaire sans toutefois apparaître dans la zone de traitement de la mémoire 110. Bien évidemment si un motif a une longueur supérieure à L, il n'est pas inséré dans le dictionnaire.

De l'étape 203 le serveur 104 passe à une étape 204 de marquage des messages 'redondants'. Les messages 'redondants' sont ceux comportant un motif du dictionnaire 109 ayant une longueur supérieure à S caractères et une fréquence d'apparition dans le dictionnaire supérieure à F. Ces conditions conjuguées constituent un critère de sélection du motif. Dans la pratique S vaut au moins 15 et F vaut au moins 100.

Dans une variante, cette détection se fait donc en parcourant en séquence le dictionnaire 109 en recherchant les motifs dont la longueur est supérieure à S et dont la fréquence d'apparition est supérieure à F. Dans notre exemple de mise en oeuvre la fréquence d'apparition pour un motif est la somme des valeurs des colonnes 109.b et 109.c.

Pour chacun des motifs ainsi trouvés le serveur 104 parcourt alors la zone de traitement de la mémoire 110 à la recherche des messages comportant ces motifs. Chacun des messages trouvés est alors marqué comme étant 'redondant'. Un tel marquage est, par exemple, une liste d'indice de message 'redondant'. Dans ce cas un message est marqué si son indices dans la zone de traitement de la mémoire 110 est dans cette liste. Dans une autre variante le marquage d'un message se fait par le positionnement d'une valeur dans l'entête du message. Dans tous les cas, les en-têtes de messages sont conservés en correspondance avec les corps de messages enregistrés dans la mémoire 110. Il est ainsi possible au serveur 104 d'émettre vers le serveur 103 les messages qu'il a traités. Il est donc possible au serveur 104 de mettre à jour un en-tête d'un message.

Dans une autre variante, la détection des messages redondants se fait directement à la création du dictionnaire via l'utilisation de la colonne 109.e. Cette colonne est, pour chaque motif, une liste d'indices de message contenant le motif. Cette liste est mise à jour en même temps que la fréquence d'apparition du motif est augmentée. Dans cette variante le marquage des messages 'redondants' se fait par un simple parcours du dictionnaire 109 et par un traitement de la colonne 109.e pour les motifs dont les longueurs et fréquences d'apparitions correspondent au critère de sélection du motif.

De l'étape 204 le serveur passe à une étape 205 de mise à jour du dictionnaire 109. Dans cette étape le serveur 104 parcourt le dictionnaire 109 et, pour chaque enregistrement :
il efface le contenu de la colonne 109.e, si cette variante de marquage est utilisée,
si la valeur de la colonne 109.c est 0,
   alors il diminue la valeur de la colonne 109.d de une unité,
   sinon il affecte la valeur K à la colonne 109.d, si la valeur de la colonne 109.d est 0
   alors il efface l'enregistrement du dictionnaire 109,
   sinon il ajoute à la valeur de la colonne 109.b la valeur de la colonne 109.c, puis il affecte à la colonne 109.c la valeur 0.

Cette étape 205 permet de gérer le contenu du dictionnaire en s'assurant que les motifs n'y restent pas trop longtemps. Un motif ne reste donc pas plus longtemps que a durée de K fenêtres temporelles dans le dictionnaire 109 après sa dernière apparition, il est également supprimé si son nombre d'apparitions sur les K fenêtres est inférieur à un seuil prédéterminé.

De l'étape 205 le serveur 104 passe à une étape 206 de traitement de la fenêtre temporelle suivante. Dans cette étape le serveur 104 émet les messages contenus dans la zone de traitement de la mémoire 110 vers le serveur 103. Lors de cette émission l'en-tête des messages ayant été détecté comme 'redondant' comporte une information signalant le caractère 'redondant' du message. Cela permet au serveur 103, par exemple, de prendre une décision sur la suite à donner à l'acheminement de ces messages marqués. Le serveur 104 attend alors la fin de la fenêtre temporelle courante puis, de l'étape 206 le serveur 104 passe à l'étape 202.

Dans l'invention le dictionnaire est donc créé lors du traitement de la première fenêtre temporelle puis mis à jour au cours du traitement des fenêtres temporelles suivantes. Le traitement d'une fenêtre temporelle bénéficie donc des mises à jours du dictionnaire 109 dues à toutes les fenêtres temporelles qui l'ont précédées.

Le procédé selon l'invention permet la détection rapide et efficace des messages 'redondants', en particulier candidats à un traitement des messages non sollicités de type SPAM.

Dans la pratique l'étape 204 peut se faire en parallèle des étapes 203 et 205 de mise à jour du dictionnaire. Cette variante permet de traiter les messages courts sans augmenter leurs délais d'acheminement. En effet un message court reçu par le serveur 104 est alors d'une part enregistré dans la mémoire 110, mais aussi traité en fonction du contenu courant du dictionnaire 109. Une fois traité le message court est alors émis vers le serveur 104 en ayant été marqué ou pas selon son contenu. Dans cette variante les premiers messages courts d'une série de messages courts 'redondants' ne seront pas détectés, mais le temps d'acheminement sera maintenu le plus court possible. Dans cette variante, le contenu de la mémoire de traitement n'est pas émis à la fin du traitement.

L'invention est particulièrement bien adaptée au traitement des messages composés de caractères dont la longueur est connue. Des longueurs standard pour de tels messages sont comprises entre 100 et 200 caractères. L'invention est donc aussi utilisable pour le traitement de messages comportant un champ objet, tels que les courriels par exemple. On peut en effet utiliser le procédé selon l'invention en l'appliquant au champ objet des courriels, ce champ étant alors soit complété, soit tronqué à la longueur L.

On note que si les serveurs 103 et 104 ne sont qu'une seule et même machine, l'information de redondance d'un message n'a pas besoin d'être transmise puisqu'elle est directement disponible au niveau du SMS-C. La décision d'acheminement concernant les messages redondants peut donc être prise directement au niveau du serveur 103 ayant aussi effectué leur détection.

Le procédé selon l'invention est particulièrement bien adapté pour être utilisé au sein d'un procédé de détection de messages non sollicités. En effet une des caractéristiques des messages non sollicités est leur redondance dans les flux de messages. Cependant tous les messages 'redondants' ne sont pas des messages non sollicités. L'information de redondance doit donc être utilisée en collaboration avec un procédé de qualification de messages, un tel procédé n'étant pas l'objet de cette demande.

## Revendications

1. Procédé de détection de messages redondants dans un flot de messages ayant une longueur L maximale connue et mesurée en nombre de caractères au moyen d'un serveur d'un réseau (101) de télécommunication **caractérisé en ce qu'**il comporte les étapes suivantes:
- enregistrement (202) par le serveur de N messages pendant une première fenêtre temporelle d'une durée prédéterminée,
- concaténation (202) par le serveur des N messages,
- recherche par le serveur de motifs répétitifs sur la concaténation réalisée au moyen de l'étape de recherche de motifs répétitifs de l'algorithme de compression LZW,
- mise à jour (203) par le serveur d'un dictionnaire de motifs à partir du résultat de la recherche de motifs répétitifs sur la concaténation réalisée, chaque motif étant associé à une fréquence d'apparition dans le résultat de la concaténation,- marquage (204) par le serveur des messages comportant un motif du dictionnaire de motifs dont la longueur est supérieure à un seuil S et dont la fréquence d'apparition est supérieure à un seuil F.

2. Procédé selon la revendication 1, **caractérisé en ce que** les messages sont des messages courts.

3. Procédé selon l'une des revendications 1 ou 2, **caractérisé en ce que** les N messages sont ajustés- ajustement (202) de la longueur des N messages à la longueur L en complétant les messages plus courts par des caractères ou motifs prédéterminé.

4. Procédé selon l'une des revendications 1 à 3, **caractérisé en ce que** L est compris entre 100 et 200.

5. Procédé selon l'une des revendications 1 à 4, **caractérisé en ce que** N correspond au nombre de messages traités par un dispositif mettant en oeuvre le procédé pendant une durée comprise entre 10 minutes et 30 minutes.

6. Procédé selon l'une des revendications 1 à 5, **caractérisé en ce que** la détection de messages redondants dans la fenêtre temporelle active est réalisée en complétant le dictionnaire issu du traitement des K-1 fenêtres temporelles précédemment traitées.

7. Procédé selon l'une des revendications 1 à 6, **caractérisé en ce qu'**un motif est retiré (205) du dictionnaire si son nombre d'apparitions dans la fenêtre active ou dans les K fenêtres temporelles est nul ou inférieur à un seuil prédéterminé.

## Patentansprüche

1. Verfahren zur Erkennung redundanter Nachrichten in einem Nachrichtenstrom mit einer maximalen Länge L, die bekannt ist und nach der Anzahl von Zeichen mit Hilfe eines Servers eines Telekommunikationsnetzes (101) gemessen wird, **dadurch gekennzeichnet, dass** es die folgenden Schritte umfasst:
- Aufzeichnung (202) von N Nachrichten während eines ersten Zeitfensters mit einer vorbestimmten Dauer durch den Server,
- Verkettung (202) der N Nachrichten durch den Server,
- Suche nach Wiederholungsmotiven auf der hergestellten Verkettung durch den Server mit Hilfe des Suchschrittes nach Wiederholungsmotiven des Kompressionsalgorithmus LZW,
- Aktualisierung (203) eines Motivwörterbuches durch den Server auf Basis des Resultats der Suche nach Wiederholungsmotiven auf der hergestellten Verkettung, wobei jedes Motiv einer Häufigkeit des Auftretens in dem Resultat der Verkettung zugeordnet ist, Kennzeichnung (204) der Nachrichten, die ein Motiv aus dem Motivwörterbuch umfassen, deren Länge größer als eine Schwelle S und deren Häufigkeit des Auftretens größer als eine Schwelle F ist, durch den Server.

2. Verfahren nach Anspruch 1, **dadurch gekennzeichnet, dass** die Nachrichten Kurznachrichten sind.

3. Verfahren nach einem der Ansprüche 1 oder 2, **dadurch gekennzeichnet, dass** die N Nachrichten angepasst werden - Anpassung (202) der Länge der N Nachrichten an die Länge L, wobei die kürzeren Nachrichten durch vorbestimmte Zeichen oder Motive vervollständigt werden.

4. Verfahren nach einem der Ansprüche 1 bis 3, **dadurch gekennzeichnet, dass** L zwischen 100 und 200 beträgt.

5. Verfahren nach einem der Ansprüche 1 bis 4, **dadurch gekennzeichnet, dass** N der Anzahl von Nachrichten entspricht, die von einer Vorrichtung bearbeitet werden, die das Verfahren während einer Dauer zwischen 10 Minuten und 30 Minuten einsetzt.

6. Verfahren nach einem der Ansprüche 1 bis 5, **dadurch gekennzeichnet, dass** die Erkennung von redundanten Nachrichten in dem aktiven Zeitfenster durch Vervollständigen des Wörterbuches, das aus der Bearbeitung der K-1 vorher bearbeiteten Zeitfenster hervorgeht, durchgeführt wird.

7. Verfahren nach einem der Ansprüche 1 bis 6, **dadurch gekennzeichnet, dass** ein Motiv aus dem Wörterbuch genommen wird (205), wenn seine Häufigkeit des Auftretens in dem aktiven Fenster oder in den K Zeitfenstern gleich Null oder kleiner als eine vorbestimmte Schwelle ist.

## Claims

1. Method for detecting redundant messages in a message stream having a maximum length L that is known and measured in terms of number of characters by means of a server of a telecommunication network (101), **characterized in that** it comprises the following steps:
- storage (202) by the server of N messages during a first time window of predetermined duration,
- concatenation (202) by the server of the N messages,
- search by the server for repetitive patterns on the concatenation produced by means of the step of searching for repetitive patterns of the LZW compression algorithm,
- updating (203) by the server of a dictionary of patterns from the result of the search for repetitive patterns on the concatenation produced, each pattern being associated with a frequency of appearance in the result of the concatenation,
- marking (204) by the server of the messages comprising a pattern from the dictionary of patterns whose length is greater than a threshold S and whose frequency of appearance is greater than a threshold F.

2. Method according to Claim 1, **characterized in that** the messages are short messages.

3. Method according to one of Claims 1 or 2, **characterized in that** the N messages are adjusted - adjustment (202) of the length of the N messages to the length L by completing the shorter messages with predetermined characters or patterns.

4. Method according to one of Claims 1 to 3, **characterized in that** L lies between 100 and 200.

5. Method according to one of Claims 1 to 4, **characterized in that** N corresponds to the number of messages processed by a device implementing the method for a duration of between 10 minutes and 30 minutes.

6. Method according to one of Claims 1 to 5, **characterized in that** the detection of redundant messages in the active time window is performed by completing the dictionary derived from the processing of the K-1 time windows previously processed.

7. Method according to one of Claims 1 to 6, **characterized in that** a pattern is removed (205) from the dictionary if its number of appearances in the active window or in the K time windows is zero or less than a predetermined threshold.
